# EUROPEAN PATENT APPLICATION

(11) **EP 0 682 050 A1**
(43) Date of publication of application: **15.11.1995**
(21) Application number: 95105149.9
(22) Date of filing: 06.04.1995
(51) Int. Cl.: C08G 18/64

(54) **Method for the production of polyurethanes and of expanded polyurethane foams**

(30) Priority: 11.05.1994 IT GE940056; 24.03.1995 IT GE950032
(71) Applicant: ERIDANIA ZUCCHERIFICI NAZIONALI S.P.A., I-16128 Genova (IT)
(72) Inventor: Turchini, Luigi, I-20129 Milano (IT); Vallini, Giorgio, I-16146 Genova (IT); Gandini, Alessandro, F-38410 St. Martin D'Uriage (FR); Picavez, Dominique, F-38770 Montegnard la Ville (FR)
(74) Representative: Porsia, Attilio, Dr.

(57) **Abstract**

Method for the production of polyurethanes and of expanded polyurethane foams consisting in the use of a two components formulation, in which the first component is a material having an hydroxylic content additioned with suitable additives as catalysts, surfactants, fillers, pigments and porogenic agents, and in which the second component is a compound containing two or more isocyanate groups. Said material having an hydroxylic content is formed either by a viscous liquid polyol and a solid powdered material of vegetal origin, or by the reaction product of propylene oxide with said solid powdered material of vegetal origin, in presence of a basic catalyst. Said material of vegetal origin is preferably formed by the dried exhausted pulps of the sugar beets.

## Description

The present invention relates to a method for the production of polyurethanes and of expanded polyurethane foams.

The synthesis of the polyurethanes is based on the condensation reaction between a hydroxylic group and an isocyanate group: 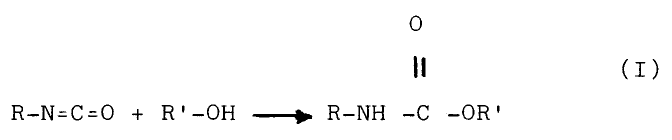
in which R is an alkyle, phenyle or aryle and R' is an alkyle. With R aryle and phenyle the reactivity of the isocyanate will be greater; at the same manner the reactivity of the alcohol is greater if R' is primary, and is decreasing if R' is secundary or tertiary. The said condensation reaction does not present condensation by-products as H₂O or acids in the ester or amidic condensations, thus resulting more simple in its development, rendering in this manner favourable the synthesis of the polyurethane. The reaction may be advantageously cathalyzed by tertiary amines and by metallorganic compounds, particuraly of the Sn IV.

The polyurethanes are obtained by means of reagents having a functionality of the above mentioned kind greater or equal to 2; that is diols or polyols and diisocyanathes or polyisocyanathes. The linear polyurethanes (which hereinafter will be mentioned as PUR) are obtained by means of diols or polyols and di- or poly-isocyanathes.

Many methods are known in the state of the art for the polymerization of the PUR which are taking into account the different needs of use of the final product; however the most widespread techniques consists in the use of a two-components formulation which is polymerized in situ in a mold, form or die.

In particular the foams of expanded PUR are obtained by the use of polyols, and for example glycitols and particularly sorbitol, which are additioned with suitable additives like the above mentioned catalyzers, surfactants, fillers, pigments and porogenic agents; the thus obtained mixture is thereafter caused to react with diisocyanathe compounds, and particularly with toluene-diisocyanathe and diphenylmethane-diisocyanathe.

With respect to the glycitols, one problem relates to the fact that as they are crystalline they are of difficult use in the above described method, and therefore they are normaly modified with polyoxy-propylene or polyoxy-ethylene bringing them to the liquid viscous condition which is more suitable for the said process. Moreover, the costs of the so-modified polyols have a rather important weight on the overall economy of the process for the production of PUR.

In the production of the foams of expanded PUR, the addition of a porogenic agent is of critical importance; normaly they are formed by low boiling point compounds which when evaporating thanks to the heat developed by the polymerization reaction, cause the formation of the pores in the mass of the polymer. However said product is commonly a compound of the class of the chlorofluorocarbons, the harmfulness of which at environmental level was amply verified. At present time said compounds are of illegal use and it is thus evident the need of their substitution, which at present may be represented by the addition of water to the formulation, which causes the release of CO₂ by the isocyanathe.

Surprisingly, is was found that one portion of the polyols utilized in the polymerization may be substituted by a material with high hydroxylic content. Said material is a residue material of the industrial processing of vegetables and particularly it was found to be advantageous to use as raw material the powder obtained from the grinding of the dried exhausted pulps of the sugar beets.

The said exhausted pulps of the sugar beets, dried, corresponds to the 7-8% b.w. of the amount of the processed vegetable mass and is usually destined to the feeding of cattle. The said material has an average composition comprising the 19-23% of cellulose, the 28-31% of hemicellulose, the 15-18% of pectine and the 3-5% of saccharose. The above composition makes the said material particularly suitable for the scopes of the invention. It is demonstrated, according to the data exposed later on, that the behaviour of said solid material is going well beyond that of a simple filler in a two-components formulation for the production of PUR, and it does contribute in a substantial portion as active component to the polymerization reaction.

Moreover, the powder of exhaust pulps of sugar beets has a water content such as to render unnecessary the use of porogen agents, with evident environmental advantages.

It is therefore the scope of the present invention a method for the production of polyurethanes and of expanded polyurethane foams in which the component of material with hydroxylic content be in part formed by a material of vegetal origin derived from industrial processes, and particularly by the exhaust pulps of the sugar industry.

A further scope of the invention is to provide a method which will enable the production of foams of polyurethanes without the use of porogenic agents, which present objective dangerous characters in respect to the environment.

It is therefore the object of the present invention a method for the production of polyurethanes and of foams of expanded polyurethanes consisting in the use of a two-components formulation, in which the first component is a material having a hydroxylic content additioned with suitable additives like catalizers, fillers, pigments and porogen agents, and in which the second component is a compound containing two or more isocyanate groups, characterized by the fact that the said material with hydroxylic content of the first component comprises a liquid viscous polyol and a material of vegetal origin recovered from industrial working processes.

Advantageously the said material of vegetal origin is obtained from the the exhaust pulps of the sugar beets.

According to a first embodiment of the method of the invention, the said material having a hydroxylic content of the first component of the said two components formulation comprises a liquid viscous polyol and a solid material in powder form obtained from the grinding of the exhaust pulps of the sugar beets.

In putting into practice the above mentioned first embodiment of the method of the invention difficulties have been encountered for the mixing of the other reagents utilized in the method of production of PUR with the powder, which is practically insoluble. Besides of this the reactivity of the same powder is rather low with respect to its potential capacities. In order to obviate to the above drawbacks, it has been thought according to another embodiment of the method of the invention to render the said powder available in form of a more or less viscous liquid, which could be easily utilized in the process known as RIM (Reaction Injection Moulding).

There are known in the state of the art several studies addressed to the solubilization of macromolecules of vegetal origin, like those conducted on the lignin by WU and GLASSER (Journal of Applied Polymer Sciences, 1984, 29, 1111-11123) which suggested the use of propylene oxide on the lignin; however the lignin presents a greater solubility with respect to the exhaust pulps considered, and moreover it presents chemical characteristics substantially different from those of the said pulps, due to the presence of many aromatic nuclei in its structure.

According to the present invention it was discovered that, surprisingly, the reaction of the solid of vegetal origin with propylene oxide brings to the obtainment of a liquid-viscous product, which is greatly more soluble and rective than the solid itself.

It is therefore still another object of the present invention to provide a second embodiment of the method for the production of PUR and expanded PUR foams consisting in the use of a two components formulation, in which the first component is a material with hydroxylic content additioned with suitable aditives like catalizers, surfactants, fillers, pigments and porogen agents, and the second component is a compund containing one or more isocyanate groups, according to which the said material with hydroxylic content is a viscous liquid with hydroxylic content derived from the treatment of a solid material of vegetal origin.

In one embodiment of the said second embodiment of the method of the invention, the said treatment consist in reacting said solid of vegetal origin with a monoalkyloxyrane, preferably methyloxyrane, commonly known as propylene oxide, in presence of a basic catalyst, as for example KOH.

According to a further embodiment of the said second embodiment of the method according to the present invention, the solid of vegetal origin and the propylene oxide are in a ratio of from 1/5 to 1/10 weight/weight, preferably 1/8 weight/weight.

In this manner, the material with hydroxylic content used, represent in any case an economical advantage with respect to those known to the state of the art, but it result considerably more reactive and of more practical use.

A still further object of the invention is a method for the production of polyurethane foams in which among the additives contained in the first component the porogenic agent is missing, since the action of the said agent is substituted by the water which is present in the said powdered solid material, which releases CO₂ from -N=C=O thus allowing the formation of pores.

Further advantages and characteristics will be evident from the following description of some embodiments of the present invention, made by way of non limiting example with reference to the annexed drawings, in which:
Figure 1 is a diagram showing the overlapping of the infrared (IR) spectrum of a sample of powder of exhaust pulps and of the IR spectrum of a sample of the foam obtained with the method according to a first embodiment of the invention;
Figure 2 is a diagram showing the overlapping of the IR spectrum of a PUR foam obtained with the method according to the first embodiment of the invention and of the IR spectrum of a PUR foam of the commerce.
Figure 3 is the IR spectum of a first sample of material with hydroxylic content used in the method according to a second embodiment of the invention.
Figure 4 is the IR spectrum of a second sample of material with hydroxylic content utilized in the method according to a second embodiment of the invention.
Figure 5 is the IR spectrum of the powder of exhaust sugar beets pulp, and
Figure 6 is the IR spectrum of a commercial polyoxypropylene.

As already stated before, the method according to the invention resides in the use of a two-components formulation, which whenever allowed to react, polymerize by producing a polyurethane.

The first component comprises a material with hydroxylic content, that is a compound or a mixture of compounds containing two or more functions -OH (polyol). As stated before, with the increase of the number of the functions -OH the possibility of reticulation of the structure of the polymer increases, and therefore also its features of stiffness are increased. In the method according to the invention the said material with hydroxylic content is formed in part by a polyol in form of a viscous liquid, and for instance a glycitol, and preferably sorbitol, the said polyol being oxypropylated in the manner previously described and known in the state of the art. The remaining portion of the said material is formed, according to a first embodiment of the method of the invention, by the powder (or by a viscous liquid derived from the treatment of said powder, according to another embodiment of the method of the invention) obtained by grinding a solid material of vegetal origin, and particularly the powder of at least partially dried exhaust pulps of sugar beets. The grinding of the solid is performed by different means, preferably by means of a mill of the FORPLEX type and/or a steelballs mill. The granulometry is not critical, however it has to be observed that the solid material used is not soluble neither in the liquid hydroxylic component nor in the isocyanate compound, and thus a possible greater subdivision of the particles with resulting increase of the contact surface of the interface solid-liquid will increase the reactivity of the solid. To this respect a very important parameter to be defined is the number of -OH groups available for the reaction with -N=C=O which are present in the powdered solid. To this end tests have been made for the determination of the OH value of the powdered solid in the manner which is described below, by understanding with the "OH value" the number of mg of KOH which are necessary for neutralizing the acid formed by the reaction of the anhydride of the corresponding acid consumed by 1 g of product.

The evaluation of the OH value for the powder of exhaust sugar beets pulp has been made by two different methods:
a) metering with isocyanate
b) metering with acetic anhydride

a) 0.2 g of powder are titred with about 1 g exactly weighted of phenylisocyanate in dioxane; the groups -N=C=O which did not react are neutralized with 15 ml of a solution of 10 g of butylamine in 100 ml of dioxane, the excess of which is in turn titred with 0.5 N HCl. From the above titration it results that 0.463 mMoles of -OH have reacted with the isocyanate; therefore for 1 g of powder 2.315 mMoles of -OH did react. From the definition of OH value above referred, the OH value of the powder is 130.
   A subsequent measurement made after a longer reaction time between powder and isocyanate has given as result an OH value of 150.
b) 1 g of powder is titred with 5.15 g of acetic anhydride. The excess of acetic anhydride is split with water and the deriving acetic acid is titred with NaOH 1. 2.297 moles of -OH groups result as having reacted, therefore the OH value is 127.

The results of the above titrations, compared with the mean OH value of a polyol commonly used (for example a sobitol) which is of about 300, permit to conclude that the value obtained for the powder of exhaust pulp of sugar beets is significant of an important reactive ability in the two-components formulation of the method according to the invention.

### Description of the first embodiment of the method of the invention

According to a first embodiment of the invention, in the first component of the formulation are present, in addition to the material having a hydroxylic content, additives which may be catalyzers for the reaction between -OH and -N=C=O, as for example tertiary amines, and for instance triethylamine, and metallorganic compounds, and particularly compounds of Sn IV.

Moreover, there may be present as additives fillers, surfactants and pigments. An important role in the production of foams of expanded PUR is performed by the porogenic agents which enable the formation of pores and thence of the most important characteristics of the said foams. Said agents, as already stated before, are commonly cholorofluorocarbons or the like derivates which are included in the mixture with the first component and which evaporate during the reaction due to its exonicity, thus forming the pores in the mass of the polymer.

The method according to the invention allows to omit the use of the said agents with the obtainment of a foam of PUR having characteristics which may be compared to that of the commercial foams. This is made possible thanks to the fact that in the powder of exhausted pulps is nevertheless present notwithstanding the drying, an amount of water, in the order of 6-12%, which is capable of allowing the reaction:

R-N=C=O + H₂O → R-NH₂ + CO₂ ↑ (II)

which permits, with its evolvement of gas, the formation of pores in the mass of PUR which is being polymerized.

Finally, the second component of the formulation is the compound containing at least two isocyanate groups (-N=C=O). The most common compounds used to this end are the toluene-2,4-diisocyanate (TDI 2,4), the toluene -2,6-diisocyanate (TD 2,6), the naftylene-1,5-diisocyanate (NDI), the difemilmethane-4,4'-diisocyanate (MDI). Of particular use are the TDI 2,6 and the MDI. The first is very toxic and difficult to be handled due to its volatility. The second is more often used in its so called "raw" form having as formula: 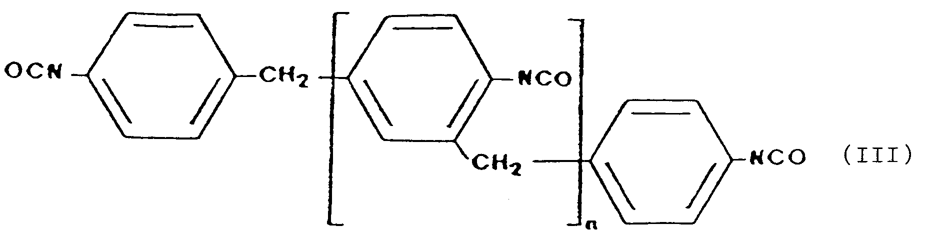
this due to the fact that the pure MDI is in crystals whilst the raw MDI is a liquid; moreover its toxicity is less than that of the TDI and a very low vapor tension make it preferable for the industrial use.

In the methods for the production of foams of PUR known to the state of the art, the following operations are performed: to the material with hydroxylic content, generally a polyol, are added the suitable reagents, generally 100 p.b.w. of polyol, 2 parts of surfactant, 1.7 parts of catalyst, 30 parts of a porogenic agent and 1 part of water; therefater to the thus obtained mixture are added 110-150 parts b.w. of a polyisocyanate compound.

Whenever utilizing the method according to the invention, it is impossible to thoroughly mix the powdered solid, i.e. the powder of exhaust pulps of sugar beet, with the liquid viscous polyol. As a consequence the liquid polyol will be first mixed with the suitable additives, as catalizers, fillers and surfactants; thereafter on the said mix a layer of powdered solid will be laid down. Finally, on the said powdered solid the polyisocyanate compound will be poured. The composition of the formulation may vary in a certain range. In the preparations given in the following examples it was experimentally ascertained that the powdered solid must be not more than the 50% b.w. of the material with hydroxylic content. In case that it be more than 50% b.w. the viscosity of the mix will greatly penalize the formation of the PUR foam: the material will result too much compact and it is not possible a sufficient expansion. Moreover a ratio amount of polyol/amount of powdered solid too low will lower too much the OH value and therefore will render difficult the obtainment of rigid foams. An advantageous compromise between the various necessities is a two components formulation comprising as first component 50 parts b.w. of viscous liquid polyol, 50 parts b.w. of powdered solid, 1.5 parts b.w. of catalyst, 1 part b.w. of surfactant; and as second component from 100 to 150 parts b.w. of polyisocyanate compound. It is important, whenever preparing formulations comprising between the 30 and the 40% b.w. on the total weight of the formulation, the inclusion of surfactants in the formulation. Analysis made at the electronic microscope have evidenced that the expansion cells of the foam presented in this manner form and dimensions acceptables with respect to the ones of the commercial foams. For the preparations in which the said value of percentual composition was exceeded it has been chosen to add a porogen agent since the porogenic action proper of the solid agent has difficulties to be exerted in such elevated conditions of viscosity.

Some examples of preparation of PUR foams according to the first embodiment of the method of the invention are referred below as well as the results of tests made on same.

### EXAMPLE 1

3 foams of PUR have been prepared with the method according to the invention. To 1 g of sorbitol the catalyst (ET₃N) and a surfactants have been added, and it was not added a porogen agent; on the thus obtained mixture was laid down a layer of powder of exhaust pulp of sugar beets (1g) ground at a granulometry comprised between 0.2 and 0.5 mm. On the powder MDI was poured; in the three preparations the amount of MDI was varied in increasing manner. The compositions of the three formulations are referred in Table 1.

### EXAMPLE 2

4 PUR foams are prepared in the same manner disclosed in Example 1, except for the fact that the amount of added powder was varied as well as that of MDI on the theoretic base of the assumption that OH value of the powder = OH value of the sorbitol. The compositions of the four formulations are referred to in Table 1.

### EXAMPLE 3

Two PUR foams have been prepared according to the method of the invention by varying the amount of powder as in Example 2 and by adding as additive a porogen agent (HFA 141 B = CH₃-CCl₂F). In Table 1 the compositions of the two formulations are referred.

### EXAMPLE 4

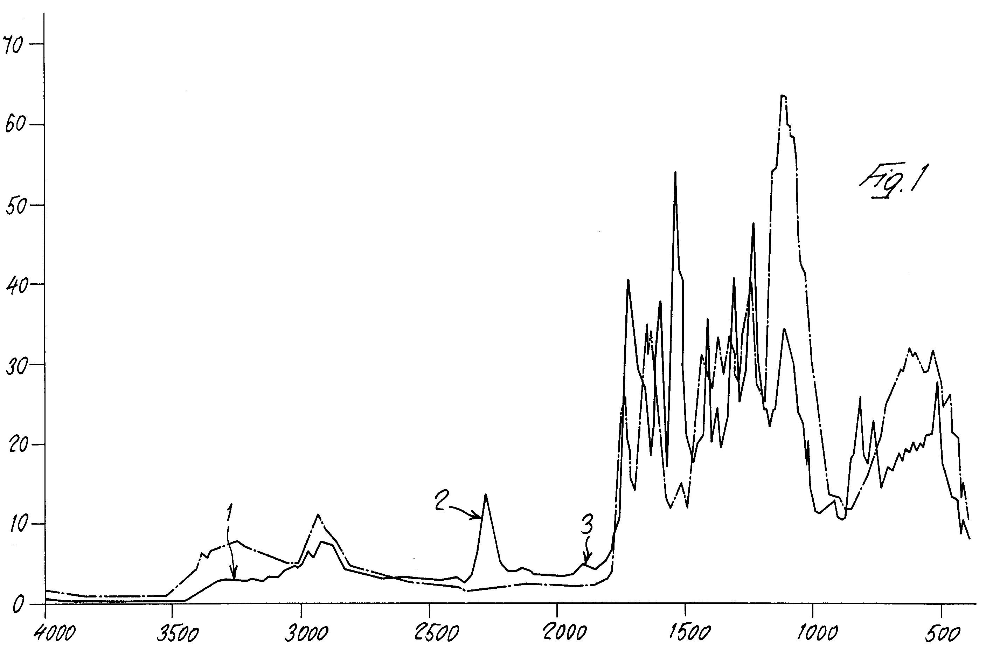

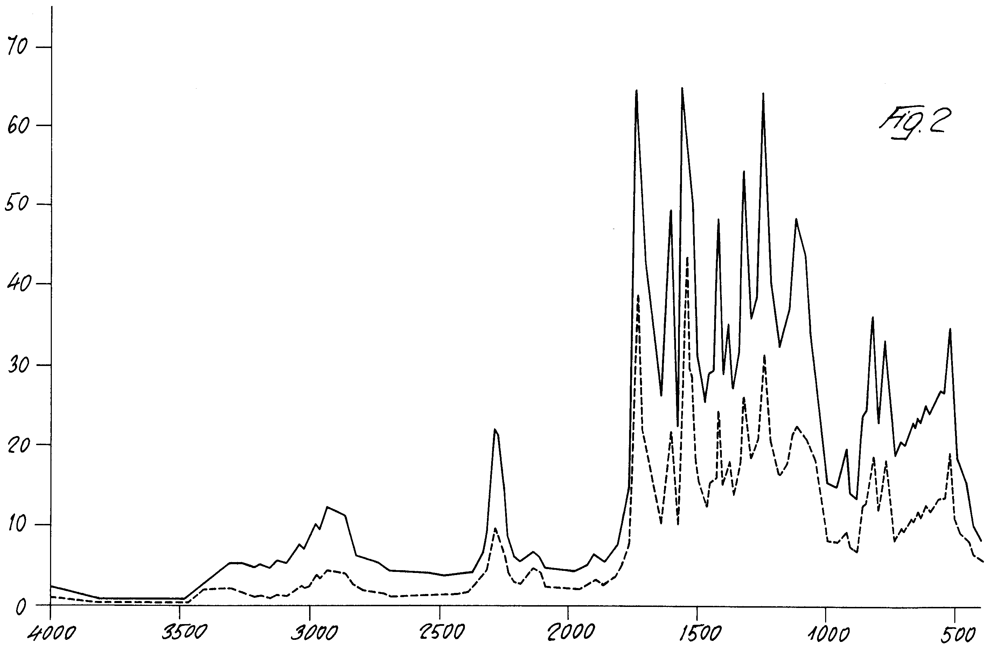

A sample of PUR foam prepared according to the preparation 2 of Example 1 was analyzed to the IR spectrophotometer; the data obtained are compared with those obtained in the analysis of a sample of powder of exhausted pulps of sugar beets (see Figure 1) and with a sample of commercial PUR foam (see Figure 2).

From the comparison of the obtained spectra it results some remarkable sperimental evidences. In the comparison of Figure 1 between the spectrum of the powder (dot and dash line) and the spectrum of the PUR foam of the method according to the invention (continous line) a first evidence is the decreasing of the diffused peak, shown in Figure 1 with the numeral 1, relative to the -OH groups between 3500 and 3000 cm⁻¹; the second relates the formation of two peaks 2,3 one of which is more evident, namely the peak 2 at 2280 cm⁻¹ of the group -N=C=O and the other at 1890 cm⁻¹ of the group C=O of the urethane; the fact that they may be remarked with respect to the measure made on the powder, permits to deduce the effective reaction of same to form urethane. The comparison between the spectrum of the foam (continuous line) and the spectrum of a commercial foam (dotted line) made in Figure 2 permit also to remark that the chemical features of the new product are as a matter of fact absolutely congruent with those of the products known to the state of the art.

### EXAMPLE 5

Two samples prepared according to the Example 1 and a sample prepared according to Example 3 have been subjected to the valuation of the thermal conductivity after 15 days from their preparation. The data are reported in Table 2 compared to the values of two commercial PUR foams.

**TABLE 1**

| | Example 1 | | | Example 2 | | | | Example 3 | |
|---|---|---|---|---|---|---|---|---|---|
| Preparation | 1 | 2 | 3 | 4 | 5 | 6 | 7 | 8 | 9 |
| powder (g) | 1 | 1 | 1 | 0.5 | 1.5 | 2 | 3 | 2 | 3 |
| Sorbitol (g) | 1 | 1 | 1 | 1 | 1 | 1 | 1 | 1 | 1 |
| Catalyst (g) | 0.03 | 0.03 | 0.03 | 0.03 | 0.03 | 0.03 | 0.03 | 0.03 | 0.03 |
| Surfactant (g) | 0.02 | 0.02 | 0.02 | 0.02 | 0.02 | 0.02 | 0.02 | 0.02 | 0.02 |
| porogen (g) | - | - | - | - | - | - | - | 0.3 | 0.6 |
| MDI (g) | 1 | 2 | 3 | 1.5 | 2.5 | 3 | 4 | 2 | 2.5 |

**TABLE 2**

| Preparation | 1 | 2 | 8 | * | ** |
|---|---|---|---|---|---|
| Thermal conductivity (W/Km) | 0.032 | 0.032 | 0.033 | 0.022 | 0.025 |
| * Commercial foam with freon 11 (at present prohibited) ** Commercial foam | | | | | |

From the results obtained it is therefore evident that the foams obtained according to the process of the invention presents chemical-physical characteristics which are absolutely comparable to those of the commercial foams.

Moreover, what previously exposed consents to give value to the thesis according to which there is a direct partecipation to the formation of the bond with the compound polyisocyanate of the powder of exhaust pulps of sugar beets. Of course the influence of the said powder is more limited with respect to what it could be predicted from its OH value, since not all the hydroxyls present in it are available for the reaction with the -N=C=O groups. Nevertheless it is surely evidenced a behaviour at least of "active filler" well different from the one which is proper to the common fillers used in the state of the art.

It will therefore be evident that the above described first embodiment of the method according to the invention permits to use a minor amount of liquid viscous polyol, by using a by-product of an industrial process which is therefore at low costs. Moreover the powder of exhaust pulps allows, in the production of foams of expanded PUR to avoid the use of porogen agents, which are very dangerous with respect to the environment, by allowing in any case the obtainment of foams provided with valuables characteristics.

### Description of the second embodiment of the method according to the invention

The solid material of vegetal origin with hydroxylic content, and particularly the powder obtained by grinding the exhaust pulps of sugar beets, utilized in the above described first embodiment of the method of production of PUR according to the present invention, presents substantially two inconveniences. Firstly the fact that it is in form of a low density (0.460) solid presents substantial drawbacks from the operational point of view whenever it is requested to react it with an isocyanate in the known reaction previously described. Moreover, the groups -OH of the powdered solid, althoug somewhat numerous, as it results from the OH value obtained for said material, present a quite limited reactivity, due both to the problems of physical type above mentioned, and to factors of steric hindrance.

It is in fact possible to immagine that the generic macromolecule of polysaccharidic type consituting the said solid may be represented as; 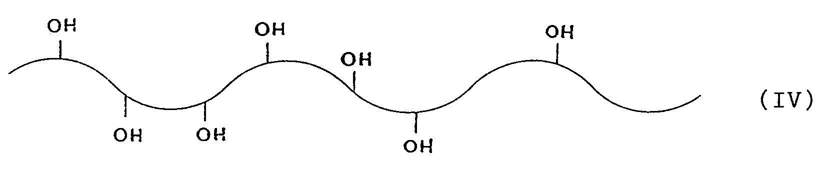
In such a macromolecule, the -OH groups result not very accessible for evident problems of steric hindrance, and therefore a great number of -OH groups is excluded from the reaction with the -N=C=O groups of the polyisocyanates.

In order to render more accessible the -OH groups of the powdered solid, so as to be able to increase their reactivity, together with the change of its aggregation state to viscous liquid, which may be utilized more easily in the reaction of the method according to the invention, it was considered to use the reaction with methyloxyrane (propylene oxide) catalized by bases, such as for example KOH, in absence of solvent, diagrammatically shown in the following: 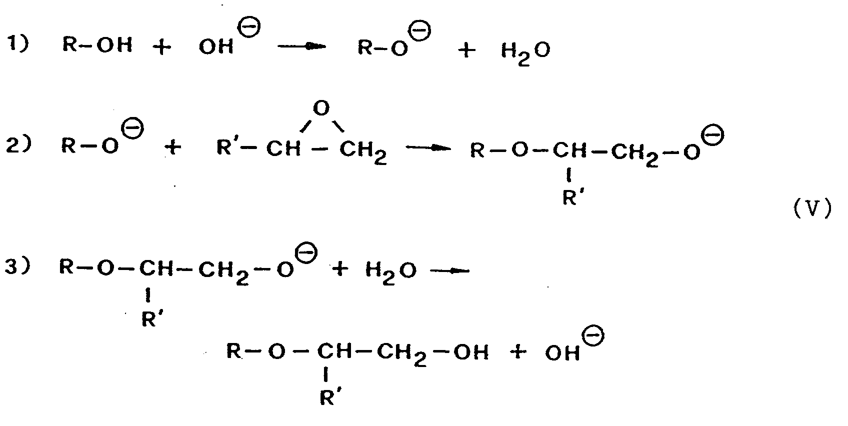
Said reaction may be repeated many times, generating on the original macromolecule a certain number of lateral chains of different length, thus modifying, in general sense, the structure shown at (IV) in the following: 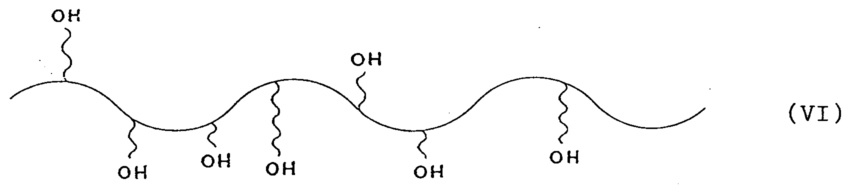
In this manner the hydroxyl groups will result more accessible to the reaction with the isocyanate groups and, if from one side the hydrophobic character of the macromolecule is increased, from the other side the greater exposition of the -OH groups make it possible the use of classical organic solvents as dimethylsulfoxyde or tetrahydrofurane.

The reaction is performed by reacting the powder of the solid of vegetal origin, that is of exhaust pulps of sugar beets, with propylene oxide in a weight ratio comprised between 1:5 and 1:10, preferably of 1:8. The powdered solid is the fraction of powdered solid having a diameter less or equal to 0.2nm. The propylene oxide is utilized as liquid having a purity degree of 99%. The catalyst is normally an alcaline metal hydroxide, preferably KOH, added to the mixture in form of solid drops, pure at 99%, in such an amount to be in a ratio between 1:10 and 1:5, and preferably 1:5.

The reaction temperature is comprised between 150°C and 180°C, and preferably it is of 160°C.

The reaction is performed under constant agitation at a pressure comprised between 0.8 MPa and 1.6 MPa, and preferably at a pressure of 1.0 MPa.

The reaction may be performed for a time which may vary from 1.5 to 4 hours; the reaction time preferably utilized is from 2.5 to 3 hours.

### EXAMPLE 6

In an autoclave provided with pressure gauge, thermometer and stirrer, and immersed in a thermostated silicon oil bath maintained at 175°C, 2 g of KOH, 10 gramms of sugar beets pulp powder and 100 ml of propylene oxide are introduced. The reactor is thereafter closed and the reaction mixture is subjected to stirring for 1.5 hours. At this point, the oil of the thermostated bath is substituted with ambient temperature water, so as to cause the temperature of the system to drop at about 30°C; the reactor may thereafter be opened for recovering the product, by diluting with CH₃OH if necessary.

The reactor is rinsed with water; the product is neutralized with HCl, thereafter the solvents optionally used for the recovery and the residual propylene oxide are eliminated by vacuum evaporation. The product obtained is in the form of a highly viscous pasty-like liquid, of dark brown color, in presence of an abundant insoluble residue.

### EXAMPLE 7

The procedure of the example 6 was repeated, except for the fact that the reaction was conducted for 3 hours.

The product obtained is in form of a viscous liquid of brown orange color with rare particles of undissolved solid.

On the two kinds of products obtained a set of measures have been conducted in order to establish in which manner and in which measure the powder of sugar beets pulp reacted with the propylene oxide and which are the characteristics of the obtained product.

Tonometrics tests have been made on the product of the preparation example 2, by utilizing the known system which permits the determination of the molecular weight of a polymer on the basis of the lowering of the vapor tension of a solvent, and a mass of 660 has resulted. The said value, however, besides to be affected by a relative incorrectness, may be induced by a bimodal distribution of masses in the product itself, that is by the contemporary presence of two families of macromolecules, which in the above mentioned analysis result as a single macromolecule having a mass equal to the average of the masses.

The said hypothesis seems to be strengthened by measures of the same sample made by the exclusion chromatography; in fact in this manner two distributions of macromolecules have been defined. At a first analysis it could be believed that the distribution with lower molecular weight and numerically more representative is due to the formation of polyoxypropylene in which the solid material with hydroxylic content is going to dissolve. However, the absence of protic solvent and the negligible concentration of water makes this hypothesis less verisimilar. Instead, it is more proper at the light of this to assume that in the powder two families of macromolecules be present which react in different ways and give rise to products of different mass.

### EXAMPLE 8

On the product obtained in the example 6 a test of plastic viscosity was made by using a rheometer CARRI-MED, that is a rotative rheometer with cone and plane. The viscosity obtained is of 988.6 Pa.s.

### EXAMPLE 9

On the product obtained in example 7, a test of viscosity was made with the same method used in Example 1. The viscosity obtained was of 8.34 Pa.s.

### EXAMPLE 10

On samples of the products obtained in the Examples of preparation 1 and 2 solubility tests have been made. The solvents used and the results obtained are shown in Table 3, in which, in function of merely visual criteria, like color of the solution, limpidity, presence of particles in suspension, the following was recorded:
- -: = not soluble
- O: = very little soluble
- +: = little soluble
- ++: = medially soluble
- +++: = very soluble

**TABLE 3**

| Solvent | Ex.6 | Ex.7 |
|---|---|---|
| Dichloromethane | O | +++ |
| THF | O | +++ |
| Dioxane | - | + |
| Acetone | O | + + |
| Methanol | +++ | + + |
| DMSO | + + | +++ |
| Water | +++ | + + |

From the Table 3 it results that the product of the example 6 is still characterized by a great solubility in polar solvents. On the contrary, the product of the example 7 is soluble with more difficulty in water and methanol and is much more soluble in dichloromethane and THF. This means that, as it was logic to think a priori, with the increase of the reaction time, the length of the lateral chains of polyoxypropylene is increased. By consequence, the increase of the lateral chain of polyoxypropylene from one side makes more free the groups -OH, and from the other side is increasing the hydrophobic character of the molecule.

### EXAMPLE 11

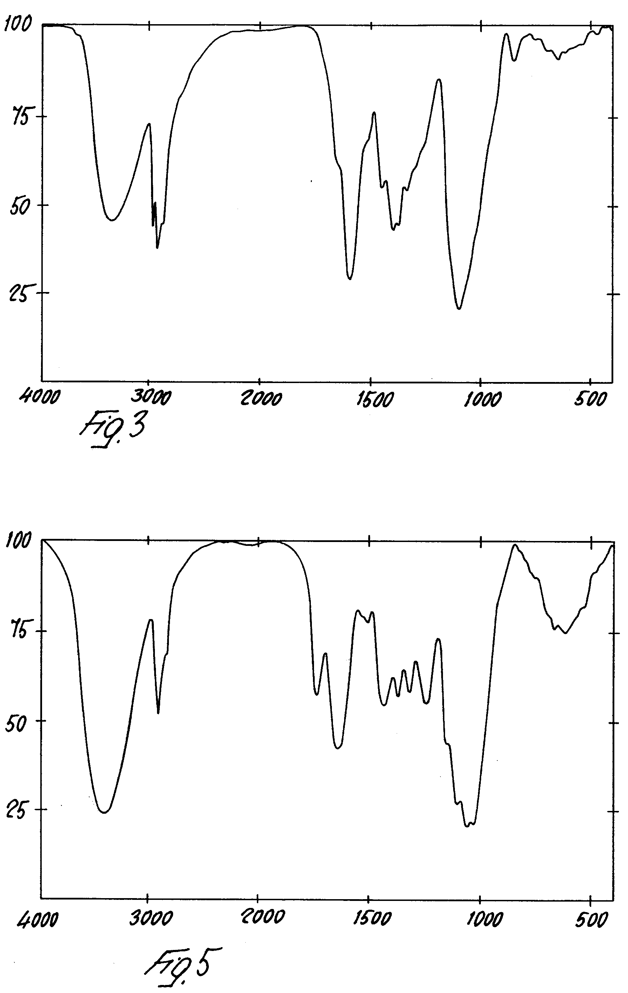

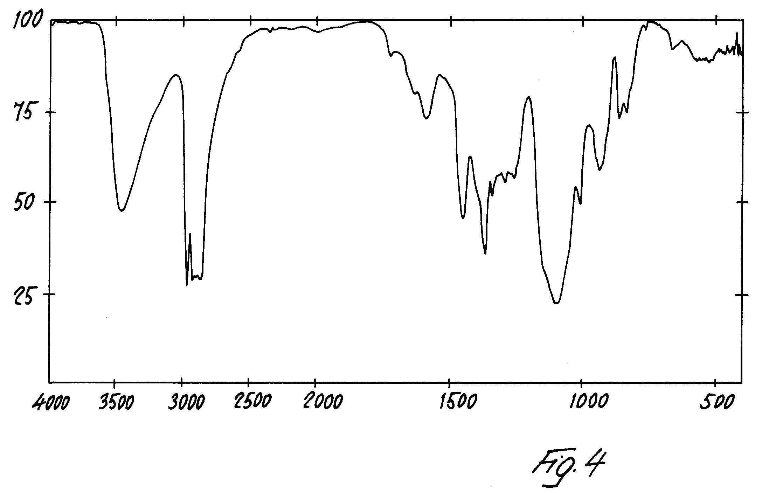

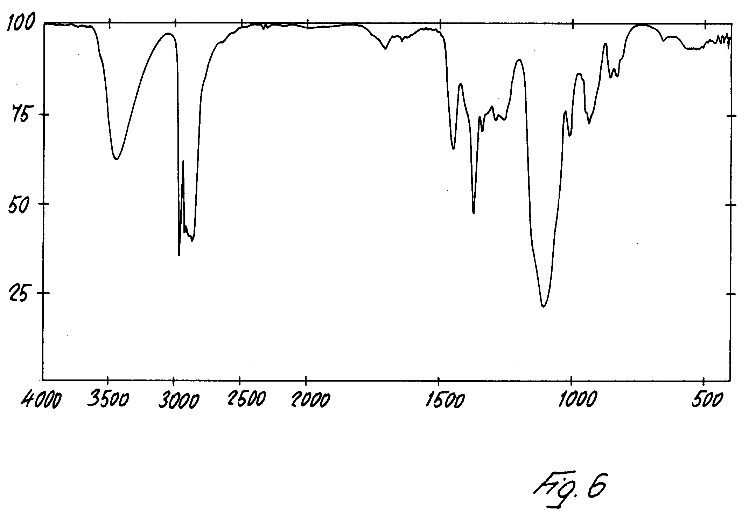

Spectroscopic analysys have been made at the infrared (in the following mentioned as IR) on samples of the products obtained in the examples 6 and 7 (Figures 3 and 4) which have been compared with the corresponding IR analysys made on the powder of sugar beet (Figure 5) and on a commercial polyoxypropylene of mass 400 (Figure 6).

The bands which result of interest for the comparation of the spectra shown in the Figures for the purposes of the present description are the following:
Around 3500 cm⁻¹ : vibration of the link OH
around 2950 cm⁻¹ : vibration of the CH (CH₃, CH₂, CH)
toward 1745 cm⁻¹ : vibration of the double link CO
toward 1375 and 1456 cm⁻¹ :vibration of the link C-CH₃
toward 1100 cm⁻¹ : vibration of the ether link
toward 1060 cm⁻¹ : vibration of the C-O-H link.

A first consideration is to be made with respect to the ratio between the bands of OH and CH. If in the spectrum of Figure 5 (powder of pulp of sugar beet) the band of OH is prevailing, the two bands tend to be equivalent in the spectrum of Figure 3 (product 6) and there is an inversion of tendence in the spectrum shown in Figure 4 (product 7). The above data furnishes the measure of how the reaction was running in a complete manner, with the formation of chains of polyoxypropylene; to this purposes the spectra of Figures 3 and 4 may be validly compared with the spectrum of Figure 6. The fact that the bands of the linkage C-CH₃ become more noticeable, confirms the formation of chains of polyoxypropylene, since said signal correspond to the methyl of the propylene oxide itself. Finally the band of the ether linkage, which in the spectrum of Figure 5 may be compared to that of the OH, in the spectra of Figures 3 and 4 becomes preponderant on this latter; also this may be explained only on the light of the formation of numerous new ether linkages due to the formation of the polyoxypropylenic chains.

It is obvious to expect from the product for which the reaction results more complete a lower OH value with respect to that found for the powder, (207 against 220), inasmuch said value is referred to one gram of substance, and therefore, the more complete will be the reaction above described, the more lower will be the OH value.

This nothwithstanding, the thus obtained product may be easily manipulated, and when it was reacted with toluendiisocyanathe (TDI) it furnished a product in immediate mode, also at ambient temperature and in absence of catalysts. It result therefore of good sense to think that generally speaking the material with hydroxylic content obtained in the above described manner may allow to obtain results of excellent level in the production of PUR according to the method of the invention. Infact said product is surely more apt to be manipulated and more reactive than the powder used in the method according to the preceding application of the same Applicant, nevertheless maintaining the advantages bound to the use of such powder both from the economical point of view and from the ecological point of view.

## Claims

1. Method for the production of polyurethanes and foams of expanded polyurethanes consisting in the use of a two-components formulation, in which the first component is a material with a hydroxylic content additioned with suitable additives as catalyzers, surfactants, fillers, pigments and porogen agents, and in which the second component is a compound containing two or more isocyanate groups, characterized by the fact that said material with hydroxylic content of the first component is derived from a solid material of vegetal origin.

2. Method according to claim 1 in which said material with hydroxylic content of the first component comprises a liquid viscous polyol and a solid powdered material, the said solid material being a material of vegetal origin.

3. Method according to claims 1 an 2 in which the two-components formulation presents the following composition:
for the first component 30-70 parts b.w. on liquid viscous polyol, 30-70 parts b.w. of powdered solid material, 1.5 parts b.w. of catalyzer, 1 part b.w. of surfactant and 15 parts b.w. of porogen agent; and
for the second component 100-150 parts b.w. of a compound containing two or more isocyanate groups.

4. Method according to claims 1 to 3, in which the composition of the first component comprises 50 parts b.w. of a viscous liquid polyol, 50 parts b.w. of solid powdered material, 1.5 parts b.w. of catalist and 1 part b.w. of surfactant.

5. Method according to claims 1 to 4, in which said material of vegetal origin is a powder obtained from the grinding of the exhaust pulps of sugar beets.

6. Method according to claim 4 in which said solid powdered material has preferably a water content from 6 to 12%.

7. Method according to the preceding claims in which the said solid powdered material preferably does not represent more than 40% b.w. of the two components formulation.

8. Method according to the preceding claims in which said material of vegetal origin has the following average composition by weight: 19-23% of cellulose, 28-31% of hemicellulose, 15-18% of pectine, 3-5 % of saccharose and water.

9. Method according to the preceding claims in which said compound containing two or more isocyanate groups is preferably diphenilmethane-4,4' diisocyanathe.

10. Polyurethane produced by using the method according to claims 1 to 9.

11. Expanded polyurethane foam produced according to the method of claims 1 to 9.

12. Method for the production of polyurethanes and foams of expanded polyurethanes according to Claim 1, consisting in the use of a two-components formulation, in which the first component is a material with a hydroxylic content additioned with suitable additives such as catalyzers, surfactants, fillers, pigments and porogen agents, and in which the second component is a compound containing two or more isocyanate groups, characterized by the fact that said material with hydroxylic content is a viscous liquid with hydroxylic content derived from the treatment of a solid material of vegetal origin, the said solid of vegetal origin being reacted with a monoalchiloxyrane, preferably methyloxyrane, commonly known as propylene oxide, in presence of a basic catalyst.

13. Method according to Claim 11, in which said basic catalyst is an hydroxide of an alcaline metal.

14. Method according to Claim 12, in which said hydroxide of alcaline metal is KOH.

15. Method according to Claims 11 to 13, in which the solid of vegetal origin and the propylene oxyde are reacted in a ratio by weight ranging from 1:10 to 1:1.

16. Method according to Claims 11 to 13, in which the solid of vegetal origin and the propylene oxide are reacted in a weight ratio of 1:8.

17. Method according to Claims 11 to 13, in which the basic catalyst is reacted in a weight ratio with respect to the solid of vegetal origin of 1:10 to 1:4.

18. Method according to Claims 11 to 13, in which the basic catalyst is reacted in a weight ratio with respect to the solid of vegetal origin of 1:5.

19. Polyurethane produced by using the method according to claims 11 to 17.

20. Expanded polyurethane foam produced according to the method of claims 11 to 17.
